# EUROPÄISCHE PATENTSCHRIFT

(11) **EP 2 497 665 B1**
(45) Veröffentlichungstag und Bekanntmachung des Hinweises auf die Patenterteilung: **11.05.2016**
(21) Anmeldenummer: 12157905.6
(22) Anmeldetag: 02.03.2012
(51) Int. Cl.: F16D 48/02, B60K 6/48, F16H 61/00, F16D 48/06, F16H 57/04, B60K 6/26

(54) **Hybrid-Antriebsstrang**
Hybrid power train
Chaîne d'entraînement hybride

(30) Priorität: 08.03.2011 DE 102011013891; 26.05.2011 DE 102011102789
(43) Veröffentlichungstag der Anmeldung: 12.09.2012
(73) Patentinhaber: GETRAG Getriebe- und Zahnradfabrik Hermann Hagenmeyer GmbH & Cie KG, 74199 Untergruppenbach (DE)
(72) Erfinder: Schweiher, Mark, 74348 Lauffen (DE); Reindt, Birgit, 71691 Freiberg (DE); Kramm, Torsten, 74360 Ilsfeld (DE)
(74) Vertreter: Witte, Weller & Partner Patentanwälte mbB

(56) Entgegenhaltungen:
- DE-A1-102007 012 716
- DE-A1-102007 043 737
- DE-C1- 10 160 466
- US-A1- 2008 108 469
- US-A1- 2008 164 115
- US-A1- 2009 095 548

## Beschreibung

Die vorliegende Erfindung betrifft einen Antriebsstrang für ein Kraftfahrzeug, mit einem Verbrennungsmotor und einer hydraulisch schaltbaren Getriebeeinheit, deren Eingang über eine Kupplungsanordnung mit einer Kurbelwelle des Verbrennungsmotors verbindbar ist und deren Ausgang mit angetriebenen Rädern des Kraftfahrzeugs verbindbar ist, wobei die Kurbelwelle ferner mit einer Pumpenwelle verbunden ist, die eine Pumpenanordnung für eine Hydraulikanordnung antreibt, mittels der die Getriebeeinheit geschaltet und/oder geschmiert wird, und wobei die Pumpenwelle ferner mit einer elektrischen Maschine verbunden ist.

Ein derartiger Antriebsstrang ist bekannt aus dem Dokument DE 10 2007 043 737 A1.

Das Dokument DE 43 42233 A1 offenbart eine Ölpumpenantriebsvorrichtung mit einem Elektromotor, der über eine erste Einwegkupplung mit einer Antriebswelle einer Ölpumpe verbindbar ist, und mit einer Maschine, die über eine zweite Einwegkupplung mit der Antriebswelle der Ölpumpe verbindbar ist, wobei die Art der Verbindung von der Drehzahl der Ausgangswelle der Maschine abhängt.

Weitere Anordnungen zum Antreiben von Getriebe-Ölpumpen sind aus den Dokumenten DE 103 29 215 A1 sowie DE 102 51 042 A1 bekannt.

Bei dem eingangs erwähnten Antriebsstrang kann die elektrische Maschine beispielsweise dazu dienen, die Pumpenanordnung für die Hydraulikanordnung anzutreiben, wenn der Verbrennungsmotor nicht läuft, beispielsweise während eines Start-Stop-Betriebs des Kraftfahrzeugs. In diesem Fall ist es beispielsweise möglich, über die derart angetriebene Pumpenanordnung die Getriebeeinheit mit Schmieröl zu versorgen.

Die in dem Dokument DE 43 42 233 B4 offenbarte Ölpumpenantriebseinrichtung weist einen relativ komplexen Aufbau auf, da die elektrische Maschine von außerhalb eines Gehäuses der Getriebeeinheit an die Pumpenwelle anzubinden ist.

Ferner ist aus dem Dokument US 2008/0164115 A1 eine Hydraulikanordnung für einen Antriebsstrang bekannt, die zwei Pumpen aufweist, von denen eine elektromotorisch und die andere mechanisch angetrieben ist.

Vor dem obigen Hintergrund ist es eine Aufgabe der Erfindung, einen verbesserten Antriebsstrang für ein Kraftfahrzeug anzugeben.

Diese Aufgabe wird durch einen Antriebsstrang nach Anspruch 1 gelöst.

Vorzugsweise ist die Pumpenwelle über ein Zwanglaufgetriebe mit der Kurbelwelle verbunden, wobei die elektrische Maschine in axialer Richtung zwischen dem Zwanglaufgetriebe und einer Pumpenanordnung angeordnet ist.

Bei dieser Ausführungsform kann die elektrische Maschine konstruktiv einfach in den Antriebsstrang integriert werden. Insbesondere kann die elektrische Maschine innerhalb eines Gehäuses der Getriebeeinheit angeordnet werden.

Die elektrische Maschine ist vorzugsweise als bürstenlose elektrische Maschine ausgeführt, insbesondere als permanent erregte Gleichstrommaschine. Ferner ist es bevorzugt, wenn die elektrische Maschine mit einer sensorlosen Ansteuerlogik kombiniert wird, beispielsweise über das sog. Back-EMF-Verfahren.

Vorzugsweise ist die elektrische Maschine koaxial zu der Pumpenwelle angeordnet.

Hierdurch ist es zum einen möglich, eine radial kompakte Anordnung zu schaffen. Hierbei ist es bevorzugt, wenn die elektrische Maschine als sog. "Torque-Motor" ausgeführt ist, mit dem ein relativ hohes Drehmoment erzeugt werden kann, so dass es nicht notwendig ist, die Pumpenwelle über eine Getriebeübersetzung anzutreiben.

Erfindungsgemäß weist die Pumpenanordnung eine erste Pumpe, die mit einem ersten Hydrauliksystem für die Kupplungsanordnung verbunden ist, und eine zweite Pumpe auf, die mit einem zweiten Hydrauliksystem für die Getriebeeinheit verbunden ist.

Dies ermöglicht es, mittels der elektrischen Maschine nicht nur ein Hydrauliksystem für die Getriebeeinheit, sondern auch ein Hydrauliksystem für die Kupplungsanordnung anzutreiben. Das Hydrauliksystem für die Kupplungsanordnung kann dabei für höhere Drücke ausgelegt sein, da das Hydrauliksystem vorzugsweise dazu ausgelegt ist, die Kupplungsanordnung zu schließen bzw. zu öffnen.

Erfindungsgemäß ist die elektrische Maschine in axialer Richtung zwischen der ersten Pumpe und der zweiten Pumpe angeordnet.

Hierdurch ist eine axial kompakte Bauweise realisierbar. Ferner ist durch diese Bauweise eine hohe Modularität gegeben, da die elektrische Maschine nur bei solchen Antriebssträngen zum Einbau kommen muss, bei denen dies notwendig ist. Bei anderen Arten von Antriebssträngen, bei denen beispielsweise die Getriebeeinheit elektromechanisch betätigt wird, ist eine solche elektrische Maschine ggf. nicht notwendig.

Insgesamt ist es ferner bevorzugt, wenn die Kurbelwelle mit der Pumpenwelle über einen ersten Freilauf verbunden ist.

Sofern die Pumpenwelle elektromotorisch angetrieben wird, kann hierdurch vermieden werden, dass der Verbrennungsmotor mitgeschleppt wird.

In entsprechender Weise ist es bevorzugt, wenn die elektrische Maschine mit der Pumpenwelle über einen zweiten Freilauf verbunden ist.

Hierdurch ist es möglich, die Pumpenwelle verbrennungsmotorisch anzutreiben, ohne dass ein Rotor der elektrischen Maschine mitgeschleppt wird.

Vorzugsweise ist der Antriebsstrang als Hybrid-Antriebsstrang ausgebildet, der eine elektrische Antriebsmaschine zum Antrieb des Kraftfahrzeuges aufweist.

Vorzugsweise ist die elektrische Antriebsmaschine dabei so an den Antriebsstrang angebunden, dass ein rein elektromotorischer Fahrbetrieb möglich ist.

Bei dieser Ausführungsform kann die Schmierung von Radsätzen der Getriebeeinheit und/oder das Betätigen von Schaltkupplungen der Getriebeeinheit unabhängig vom Betrieb des Verbrennungsmotors auch dann erfolgen, wenn ein rein elektromotorischer Antrieb eingerichtet wird.

Besonders bevorzugt ist es dabei, wenn die elektrische Antriebsmaschine mit dem Ausgang der Getriebeeinheit verbunden ist.

Hierdurch kann die elektrische Antriebsmaschine zum einen einfach an den Antriebsstrang angebunden werden. Da elektrische Maschinen über einen großen Drehzahlbereich arbeiten, ist es nicht unbedingt notwendig, die elektrische Antriebsmaschine mit dem Eingang der Getriebeeinheit zu verbinden.

Da bei dieser Ausführungsform die Besonderheit auftritt, dass der Getriebeeingang im elektrischen Fahrbetrieb stillsteht, ergibt sich die Problematik, dass eine Schmierung des Getriebes nur über eine mit der Pumpenwelle verbundene elektrische Maschine möglich ist.

Die elektrische Maschine kann konstruktiv auf verschiedene Art und Weise ausgeführt werden. Beispielsweise kann die elektrische Maschine in Scheibenläuferbauweise ausgeführt werden.

Gemäß einer bevorzugten Ausführungsform ist die elektrische Maschine als Innenläufermaschine ausgebildet.

Hierbei kann die Anordnung des Läufers bzw. Rotors gut gegenüber der Umgebung abgeschirmt werden.

Gemäß einer alternativen bevorzugten Ausführungsform ist die elektrische Maschine als Außenläufermaschine ausgebildet.

Der Antriebsstrang kann als Antriebsstrang mit einem automatisierten Schaltgetriebe oder mit einem manuellen Schaltgetriebe eingerichtet sein, ist jedoch vorzugsweise als Doppelkupplungsgetriebe ausgebildet.

Insgesamt wird vorzugsweise erreicht, dass in einem Antriebsstrang der oben bezeichneten Art durch den zusätzlichen Antrieb der Pumpenanordnung mittels einer elektrischen Maschine erweiterte Funktionalitäten des Getriebes im elektrischen Antriebsmodus ermöglicht werden, insbesondere Schaltungen in der Getriebeeinheit. Auch der Antrieb einer Radsatzölpumpe kann integriert werden.

Durch die elektromotorisch angetriebene Pumpenwelle ist es beispielsweise auch möglich, eine hydraulisch zu entriegelnde Parksperre der Getriebeeinheit zu betätigen, selbst wenn der Verbrennungsmotor nicht im Betrieb ist. Eine Änderung der hydraulischen Getriebeaktuatorik ist dann nicht notwendig.

Der Zusatzantrieb mittels der elektrischen Maschine kann die hydraulische Druckversorgung gewährleisten, damit zumindest einige Funktionalitäten der hydraulisch schaltbaren Getriebeeinheit auch im elektrischen Fahrbetrieb möglich sind, insbesondere Rückschaltungen in kleinere Gänge, um das nächste Anfahren mit dem Verbrennungsmotor zu ermöglichen, ein komfortableres Zustarten des Verbrennungsmotors durch Schließen der Kupplungsanordnung, etc.

Ferner kann auch die Schmierölversorgung der Radsätze der Getriebeeinheit hierdurch übernommen werden. Die Getriebeeinheit muss insofern nicht gegenüber anderen Antriebssträngen geändert werden, bei denen ein elektrischer Fahrbetrieb nicht eingerichtet wird.

Ferner ist es möglich, herkömmliche Antriebsstränge durch einen derartigen elektromotorischen Zusatzantrieb der Pumpenwelle zu erweitern, und zwar im Rahmen eines vorhandenen Getriebepackages. Hierdurch ergibt sich eine identische Getriebe-Performance im Verbrennungsmotorbetrieb. Mit wenigen zusätzlichen Bauteilen ist eine hohe zusätzliche Funktionalität gegeben.

Die Schmierung von Radsätzen der Getriebeeinheit kann ferner durch eine unabhängige Elektropumpe erfolgen, die damit bedarfsgerecht eingestellt werden kann und den Wirkungsgrad des Gesamtsystems verbessern kann. In diesem Fall würde die elektrische Maschine nur eine Pumpe zum Schalten der Getriebeeinheit antreiben.

Ausführungsbeispiele der Erfindung sind in der Zeichnung dargestellt und werden in der nachfolgenden Beschreibung näher erläutert. Es zeigen:
- Fig. 1: in schematischer Form eine erste Ausführungsform eines erfindungsgemäßen Antriebsstranges;
- Fig. 2: eine Teilschnittansicht einer Pumpenwelle mit elektrischer Maschine, wie sie in dem Antriebsstrang der Fig. 1 verwendbar ist;
- Fig. 3: eine Teilschnittansicht einer weiteren Ausführungsform einer Pumpenwelle mit einer elektrischen Maschine in Außenläuferbauweise; und
- Fig. 4: eine Teilschnittansicht einer Pumpenwelle mit einer elektrischen Maschine in Innenläuferbauweise.

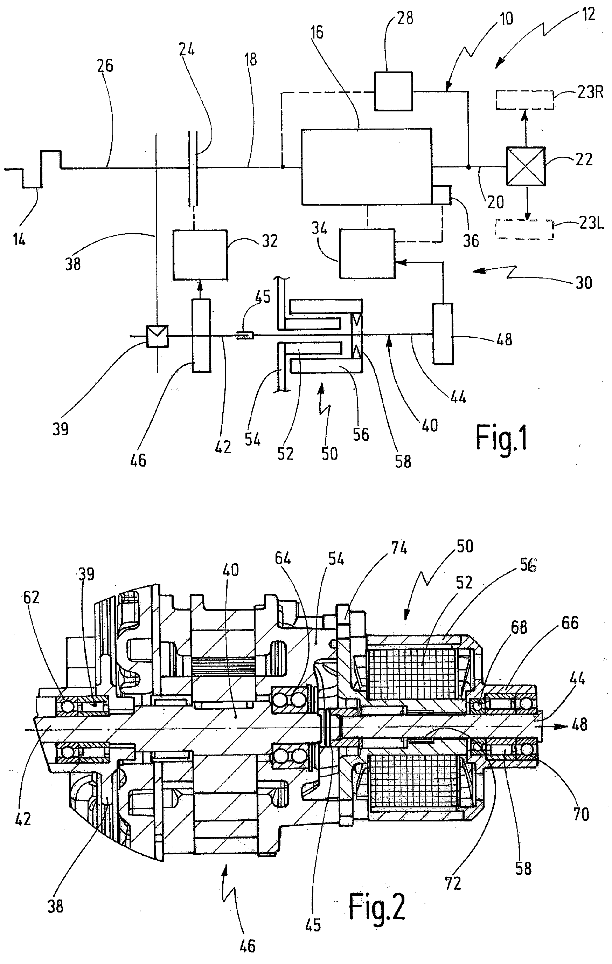

In Fig. 1 ist ein Antriebsstrang generell mit 10 bezeichnet, der zum Antreiben eines schematisch dargestellten Kraftfahrzeuges 12 dient.

Der Antriebsstrang weist einen Verbrennungsmotor 14 und eine hydraulisch schaltbare Getriebeeinheit 16 auf. Die Getriebeeinheit 16 kann beispielsweise als Stufengetriebe in Vorgelegebauweise ausgeführt sein. Es kann sich um ein einfaches Getriebe oder um die zwei Teilgetriebe eines Doppelkupplungsgetriebes handeln. Die Getriebeeinheit 16 weist einen Eingang 18 und einen Ausgang 20 auf. Der Ausgang 20 ist über ein Differentialgetriebe 22 mit angetriebenen Rädern 23L, 23R des Kraftfahrzeuges 12 verbunden.

Der Antriebsstrang 10 weist ferner eine Kupplungsanordnung 24 auf, die den Eingang 18 der Getriebeeinheit 16 mit einer Kurbelwelle 26 des Verbrennungsmotors 14 verbindet. Die Kupplungsanordnung 24 kann eine einfache nasslaufende oder trockene Reibkupplung sein, die beispielsweise automatisiert schlupfend betrieben werden kann. Bei Integration eines Doppelkupplungsgetriebes kann es sich bei der Kupplungsanordnung 24 auch um eine Doppelkupplungsanordnung handeln, so dass der Eingang 18 der Getriebeeinheit 16 zwei Wellen aufweist.

Bei 28 ist ferner eine elektrische Antriebsmaschine gezeigt, die mit dem Ausgang 20 der Getriebeeinheit 16 verbunden ist. Alternativ kann die elektrische Antriebsmaschine 28 auch mit dem Eingang 18 der Getriebeeinheit 16 verbunden sein, wie es gestrichelt dargestellt ist.

Bei dem Antriebsstrang 10 ist es zum einen möglich, das Kraftfahrzeug 12 rein verbrennungsmotorisch anzutreiben, wobei die Kupplungsanordnung 24 geschlossen ist und in der Getriebeeinheit 16 eine Gangstufe eingelegt ist. Ferner ist es möglich, das Kraftfahrzeug 12 rein elektromotorisch anzutreiben, wenn beispielsweise die Reibkupplungsanordnung 24 geöffnet ist und die elektrische Antriebsmaschine 28 ein Antriebsmoment auf den Ausgang 20 der Getriebeeinheit 16 überträgt. In der Getriebeeinheit 16 kann dabei eine Gangstufe eingelegt sein oder auch nicht. Vorzugsweise ist keine Gangstufe eingelegt, um zu vermeiden, dass unnötige Massen mitgeschleppt werden.

Sofern die elektrische Antriebsmaschine 28 mit dem Eingang 18 der Getriebeeinheit 16 verbunden ist, ist die Reibkupplungsanordnung 24 im rein elektromotorischen Betrieb ebenfalls geöffnet, in der Getriebeeinheit 16 ist jedoch eine Gangstufe eingelegt.

Der Antriebsstrang 10 weist ferner eine Hydraulikanordnung 30 auf, die ein erstes Hydrauliksystem 32 und ein zweites Hydrauliksystem 34 aufweist. Das erste Hydrauliksystem 32 dient zur Betätigung der Reibkupplungsanordnung 24. Das zweite Hydrauliksystem 34 dient zum einen zur Betätigung von Schaltkupplungen der Getriebeeinheit 16 sowie zur Schmierung von Radsätzen der Getriebeeinheit 16. Ferner kann das zweite Hydrauliksystem 34 auch zum Ein- und Auslegen einer Parksperrenanordnung 36 dienen.

Generell ist es auch möglich, dass das erste Hydrauliksystem 32 auch dazu ausgelegt ist, die Schaltkupplungen der Getriebeeinheit 16 und/oder die Parksperrenanordnung 36 zu betätigen. In diesem Fall dient das zweite Hydrauliksystem 34 alleine zum Schmieren der Radsätze der Getriebeeinheit 16.

Die Kurbelwelle 26 (oder der Eingang 18 der Getriebeeinheit 16) ist über ein Zwanglaufgetriebe 38 wie einen Konstanten-Radsatz, einen Reibradsatz, einen Zahnriemen- oder Kettenantrieb mit einer Pumpenwelle 40 verbunden, und zwar über einen ersten Freilauf 39. Wenn der Verbrennungsmotor 14 im Betrieb ist, wird über den Freilauf 39 die Pumpenwelle 40 angetrieben.

Wenn die Pumpenwelle 40 hingegen auf andere Art und Weise angetrieben wird, wird der Verbrennungsmotor 14 nicht mitgeschleppt.

Die Pumpenwelle 40 ist in eine erste Teilwelle 42 und eine zweite Teilwelle 44 unterteilt, die über eine schematisch dargestellte Steckverbindung 45 drehfest miteinander verbunden sind.

Die erste Teilwelle 42 ist mit einem Ausgang des ersten Freilaufs 39 verbunden. Eine erste Pumpe 46 zur Versorgung des ersten Hydrauliksystems 32 ist an der ersten Teilwelle 42 angeordnet bzw. wird von dieser angetrieben. Vorzugsweise ist die erste Pumpe konzentrisch zu der ersten Teilwelle 42 angeordnet.

Ferner ist an der zweiten Teilwelle 44 eine zweite Pumpe 48 angeordnet bzw. wird von dieser angetrieben. Die zweite Pumpe 48 ist vorzugsweise ebenfalls konzentrisch zu der zweiten Teilwelle 44 angeordnet und dient dazu, das zweite Hydrauliksystem 34 mit Fluid zu versorgen.

Im Bereich zwischen den zwei Pumpen 46, 48 ist konzentrisch zu der Pumpenwelle 40 eine elektrische Maschine 50 angeordnet. Die elektrische Maschine 50 weist einen Stator 52 auf, der als Innenstator ausgebildet und mit einem Gehäuse 54 (beispielsweise einem Getriebegehäuse) starr verbunden ist.

Ferner weist die elektrische Maschine 50 einen Rotor 56 auf, der als Außenrotor ausgebildet und über einen zweiten Freilauf 58 mit der Pumpenwelle 40, genauer gesagt der zweiten Teilwelle 44, verbunden ist.

Die elektrische Maschine 50 ist dabei bevorzugt an der zweiten Teilwelle 44 angeordnet.

Bei einem rein elektromotorischen Antrieb mittels der elektrischen Antriebsmaschine 28 ist die Reibkupplung 24 in der Regel geöffnet und der Verbrennungsmotor 14 steht. In diesem Fall wird die elektrische Maschine 50 als Motor zum Antreiben der Pumpenwelle 40 angesteuert. Aufgrund des Freilaufs 39 wird dabei ein Mitschleppen des Verbrennungsmotors 14 verhindert. Wenn andererseits der Antriebsstrang 10 einen verbrennungsmotorischen Fahrbetrieb einrichtet, wird die Pumpenwelle 40 über den ersten Freilauf 39 mittels des Verbrennungsmotors 14 angetrieben. Aufgrund des zweiten Freilaufs 58 wird dabei der Rotor 56 nicht mitgeschleppt.

Die Ausführungsform der Fig. 2 zeigt einen Ausschnitt aus einem Antriebsstrang 10 einschließlich der Pumpenwelle 40. Der generelle Aufbau und die generelle Funktionsweise entsprechen dabei der Anordnung der Pumpenwelle 40 der Fig. 1. Gleiche Elemente sind daher durch gleiche Bezugszeichen bezeichnet. Im Folgenden werden im Wesentlichen die Unterschiede bzw. Verfeinerungen erläutert.

Ein Antriebsrad des Zwanglaufgetriebes 38 ist über den ersten Freilauf 39 mit der ersten Teilwelle 42 verbunden. Ferner ist das Antriebsrad des Zwanglaufgetriebes 38 über ein erstes Lager 62 an der ersten Teilwelle 42 drehbar gelagert.

Die erste Teilwelle 42 ist an ihrem anderen Ende im Bereich der Steckverbindung 45 mittels eines zweiten Lagers 64 an einem Gehäuse 54 drehbar gelagert. Der Rotor 56 weist eine sich in Richtung von dem Zwanglaufgetriebe 38 weg weisende Lagerhülse 66 auf, mittels der der Außenrotor 56 über ein drittes Lager 68 und ein viertes Lager 70 drehbar an der zweiten Teilwelle 44 gelagert ist. Der zweite Freilauf 58 ist dabei zwischen dem dritten Lager 68 und dem vierten Lager 70 angeordnet.

Der Stator 52, der an dem Gehäuse 54 festgelegt ist, ist über ein fünftes Lager (beispielsweise ein Nadellager) drehbar an der zweiten Teilwelle 44 gelagert. Der Stator 52 ist ferner auf der dem Zwanglaufgetriebe 38 zugewandten Seite der elektrischen Maschine 50 mit einem sich radial erstreckenden Statorträger 74 verbunden, mittels dessen der Stator 52 an dem Gehäuse 54 festgelegt ist.

Es ist ferner gezeigt, dass die erste Pumpe 46 an der ersten Teilwelle 42 im Bereich zwischen dem Zwanglaufgetriebe 38 und dem zweiten Lager 64 angeordnet ist. Die Steckverbindung 45 ist in axialer Richtung etwa zwischen dem zweiten Lager 64 und der elektrischen Maschine 50 angeordnet.

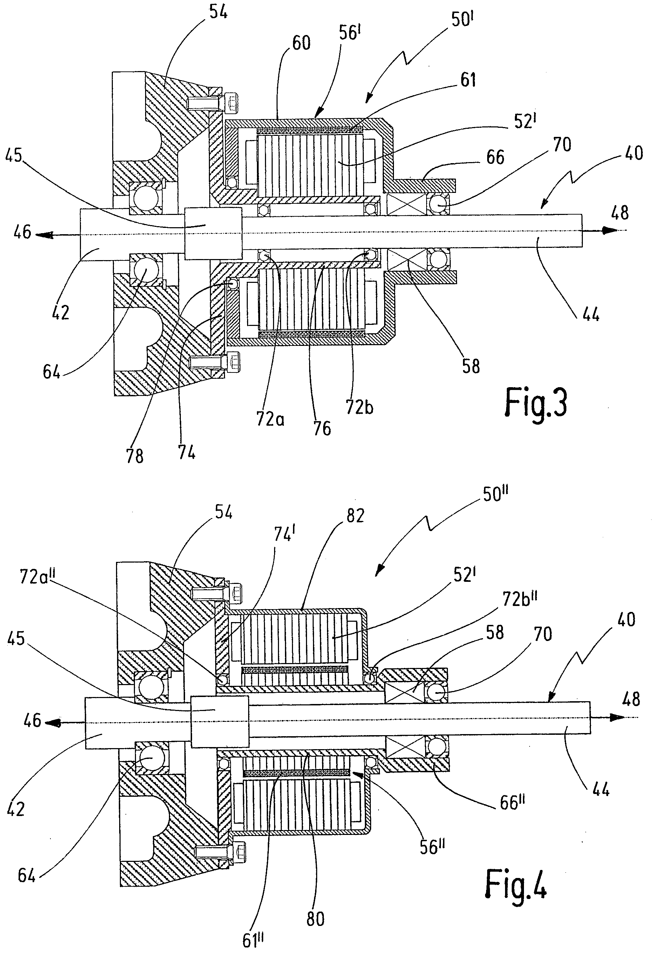

In den folgenden Fig. 3 und 4 sind zwei alternative Ausführungsformen von elektrischen Maschinen 50' bzw. 50" gezeigt, die jeweils mit einer Pumpenwelle 40 verbindbar sind, wie sie beispielsweise in Fig. 2 gezeigt ist.

Die in Fig. 3 gezeigte elektrische Maschine 50' ist ebenso wie die elektrische Maschine 50 der Fig. 2 als Außenläufermaschine ausgebildet. Der generelle Aufbau und die Funktionsweise sind generell identisch wie bei der Ausführungsform der Fig. 2. Gleiche Elemente sind daher mit gleichen Bezugsziffern versehen. Im Folgenden werden im Wesentlichen die Unterschiede erläutert. So ist bei der elektrischen Maschine 50' der Fig. 3 der Rotor 56' an einer Rotortrommel 60 festgelegt, die die Lagerhülse 66 aufweist. An der Rotortrommel 60 sind Permanentmagnete 61 des Rotors 56' festgelegt. Die Rotortrommel 60 ist im Bereich der Lagerhülse mittels eines einzelnen Lagers (viertes Lager 70) gelagert, das axial benachbart ist zu dem zweiten Freilauf 58. Ferner ist die Rotortrommel 60 benachbart zu dem Gehäuse 54 an dem Statorträger 74 radial gelagert, und zwar mittels eines sechsten Lagers 78.

Die zweite Teilwelle 44 ist radial innerhalb einer Trägerhülse 76 des Statorträgers 74 mittels zweier fünfter Lager 72a, 72b gelagert, wobei die Trägerhülse 76 eine hülsenförmige Erweiterung des Statorträgers 74 ist.

In Fig. 4 ist eine elektrische Maschine 50" in Innenläuferbauweise gezeigt. Diese entspricht hinsichtlich Aufbau und Funktion generell den oben beschriebenen Figuren. Gleiche Elemente sind daher mit gleichen Bezugszeichen versehen. Im Folgenden werden im Wesentlichen die Unterschiede erläutert.

So ist eine Rotorwelle 80 koaxial zu der Pumpenwelle 40 angeordnet und zum einen an einem Statorträger 74' mittels eines Lagers 72a" und zum anderen an einem mit dem Statorträger 74' verbundenen Statorgehäuse 82 mittels eines weiteren Lagers 72b" drehbar gelagert. Die Lagerhülse 66" ist mit der Rotorwelle 80 verbunden und erstreckt sich aus dem Statorgehäuse 82 in axialer Richtung heraus. Hierdurch kann ebenfalls eine radial kompakte Bauweise erzielt werden, insbesondere dann, wenn die Lagerhülse 66" einen größeren Außendurchmesser aufweist als die Rotorwelle 80.

## Patentansprüche

1. Antriebsstrang (10) für ein Kraftfahrzeug (12), mit einem Verbrennungsmotor (14) und einer hydraulisch schaltbaren Getriebeeinheit (16), deren Eingang (18) über eine Kupplungsanordnung (24) mit einer Kurbelwelle (26) des Verbrennungsmotors (14) verbindbar ist und deren Ausgang (20) mit angetriebenen Rädern (23) des Kraftfahrzeuges (12) verbindbar ist, wobei die Kurbelwelle (26) ferner mit einer Pumpenwelle (40) verbunden ist, die eine Pumpenanordnung (46, 48) für eine Hydraulikanordnung (30) antreibt, mittels der die Getriebeeinheit (16) geschaltet und/oder geschmiert wird, wobei die Pumpenwelle (40) ferner mit einer elektrischen Maschine (50) verbunden ist,
**dadurch gekennzeichnet, dass**
die Pumpenanordnung (46, 48) eine erste Pumpe (46), die mit einem ersten Hydrauliksystem (32) für die Kupplungsanordnung (24) verbunden ist, und eine zweite Pumpe (48) aufweist, die mit einem zweiten Hydrauliksystem (34) für die Getriebeeinheit (16) verbunden ist, wobei die elektrische Maschine (50) in axialer Richtung zwischen der ersten Pumpe (46) und der zweiten Pumpe (48) angeordnet ist.

2. Antriebsstrang nach Anspruch 1, **dadurch gekennzeichnet, dass** die elektrische Maschine (50) koaxial zu der Pumpenwelle (40) angeordnet ist.

3. Antriebsstrang nach Anspruch 1 oder 2, **dadurch gekennzeichnet, dass** die Pumpenwelle (40) über ein Zwanglaufgetriebe (38) mit der Kurbelwelle (26) verbunden ist, wobei die elektrische Maschine (50) in axialer Richtung zwischen dem Zwanglaufgetriebe (38) und einer Pumpe (48) der Pumpenanordnung (46, 48) angeordnet ist.

4. Antriebsstrang nach einem der Ansprüche 1 - 3, **dadurch gekennzeichnet, dass** die Kurbelwelle (26) mit der Pumpenwelle (40) über einen ersten Freilauf (39) verbunden ist.

5. Antriebsstrang nach einem der Ansprüche 1 - 4, **dadurch gekennzeichnet, dass** die elektrische Maschine (50) mit der Pumpenwelle (40) über einen zweiten Freilauf (58) verbunden ist.

6. Antriebsstrang nach einem der Ansprüche 1 - 5, **dadurch gekennzeichnet, dass** der Antriebsstrang (10) als Hybrid-Antriebsstrang ausgebildet ist, der eine elektrische Antriebsmaschine (28) zum Antrieb des Kraftfahrzeuges (12) aufweist.

7. Antriebsstrang nach Anspruch 6, **dadurch gekennzeichnet, dass** die elektrische Antriebsmaschine (28) mit dem Ausgang (20) der Getriebeeinheit (16) verbunden ist.

8. Antriebsstrang nach einem der Ansprüche 1 - 7, **dadurch gekennzeichnet, dass** die elektrische Maschine (50) als Innenläufermaschine (50") ausgebildet ist.

9. Antriebsstrang nach einem der Ansprüche 1 - 7, **dadurch gekennzeichnet, dass** die elektrische Maschine (50) als Außenläufermaschine (50') ausgebildet ist.

## Claims

1. Drive train (10) for a motor vehicle (12), having an internal combustion engine (14) and a hydraulically shiftable transmission unit (16), the input (18) of which can be connected via a clutch arrangement (24) to a crankshaft (26) of the internal combustion engine (14) and the output (20) of which can be connected to driven wheels (23) of the motor vehicle (12), the crankshaft (26) being connected, furthermore, to a pump shaft (40) which drives a pump arrangement (46, 48) for a hydraulic arrangement (30), by means of which the transmission unit (16) is shifted and/or lubricated, the pump shaft (40) being connected, furthermore, to an electric machine (50),
**characterized in that**
the pump arrangement (46, 48) has a first pump (46) which is connected to a first hydraulic system (32) for the clutch arrangement (24) and a second pump (48) which is connected to a second hydraulic system (34) for the transmission unit (16), wherein the electric machine (50) is arranged in the axial direction between the first pump (46) and the second pump (48).

2. Drive train according to Claim 1, **characterized in that** the electric machine (50) is arranged coaxially with respect to the pump shaft (40).

3. Drive train according to Claim 1 or 2, **characterized in that** the pump shaft (40) is connected to the crankshaft (26) via a constrained motion mechanism (38), the electric machine (50) being arranged in the axial direction between the constrained motion mechanism (38) and a pump (48) of the pump arrangement (46, 48).

4. Drive train according to one of Claims 1 to 3, **characterized in that** the crankshaft (26) is connected to the pump shaft (40) via a first freewheel (39).

5. Drive train according to one of Claims 1 to 4, **characterized in that** the electric machine (50) is connected to the pump shaft (40) via a second freewheel (58).

6. Drive train according to one of Claims 1 to 5, **characterized in that** the drive train (10) is configured as a hybrid drive train which has an electric drive machine (28) for driving the motor vehicle (12).

7. Drive train according to Claim 6, **characterized in that** the electric drive machine (28) is connected to the output (20) of the transmission unit (16).

8. Drive train according to one of Claims 1 to 7, **characterized in that** the electric machine (50) is configured as an internal-rotor machine (50").

9. Drive train according to one of Claims 1 to 7, **characterized in that** the electric machine (50) is configured as an external-rotor machine (50').

## Revendications

1. Chaîne cinématique (10) pour un véhicule automobile (12), comprenant un moteur à combustion interne (14) et une unité de transmission (16) à commutation hydraulique dont l'entrée (18) peut être connectée par le biais d'un agencement d'embrayage (24) à un vilebrequin (26) du moteur à combustion interne (14) et dont la sortie (20) peut être connectée à des roues motrices (23) du véhicule automobile (12), le vilebrequin (26) étant en outre connecté à un arbre de pompe (40) qui entraîne un agencement de pompe (46, 48) pour un agencement hydraulique (30) au moyen duquel l'unité de transmission (16) est commutée et/ou lubrifiée, l'arbre de pompe (40) étant en outre connecté à une machine électrique (50),
**caractérisée en ce que**
l'agencement de pompe (46, 48) présente une première pompe (46) qui est connectée à un premier système hydraulique (32) pour l'agencement d'embrayage (24), et une deuxième pompe (48) qui est connectée à un deuxième système hydraulique (34) pour l'unité de transmission (16), la machine électrique (50) étant disposée dans la direction axiale entre la première pompe (46) et la deuxième pompe (48).

2. Chaîne cinématique selon la revendication 1, **caractérisée en ce que** la machine électrique (50) est disposée coaxialement par rapport à l'arbre de pompe (40).

3. Chaîne cinématique selon la revendication 1 ou 2, **caractérisée en ce que** l'arbre de pompe (40) est connecté par le biais d'une transmission forcée (38) au vilebrequin (26), la machine électrique (50) étant disposée dans la direction axiale entre la transmission forcée (38) et une pompe (48) de l'agencement de pompe (46,48).

4. Chaîne cinématique selon l'une quelconque des revendications 1 à 3, **caractérisée en ce que** le vilebrequin (26) est connecté à l'arbre de pompe (40) par le biais d'une première roue libre (39).

5. Chaîne cinématique selon l'une quelconque des revendications 1 à 4, **caractérisée en ce que** la machine électrique (50) est connectée à l'arbre de pompe (40) par le biais d'une deuxième roue libre (58).

6. Chaîne cinématique selon l'une quelconque des revendications 1 à 5, **caractérisée en ce que** la chaîne cinématique (10) est réalisée sous forme de chaîne cinématique hybride qui présente un moteur d'entraînement électrique (28) pour l'entrainement du véhicule automobile (12).

7. Chaîne cinématique selon la revendication 6, **caractérisée en ce que** le moteur d'entraînement électrique (28) est connecté à la sortie (20) de l'unité de transmission (16).

8. Chaîne cinématique selon l'une quelconque des revendications 1 à 7, **caractérisée en ce que** la machine électrique (50) est réalisée sous forme de machine à rotor intérieur (50").

9. Chaîne cinématique selon l'une quelconque des revendications 1 à 7, **caractérisée en ce que** la machine électrique (50) est réalisée sous forme de machine à rotor extérieur (50').
